# EUROPEAN PATENT SPECIFICATION

(11) **EP 3 626 513 B1**
(45) Date of publication and mention of the grant of the patent: **06.04.2022**
(21) Application number: 18195801.8
(22) Date of filing: 20.09.2018
(51) Int. Cl.: B60L 53/16

(54) **CHARGING ARRANGEMENT FOR AN ELECTRICAL VEHICLE AND RESPECTIVE METHOD**
LADEANORDNUNG FÜR EIN ELEKTROFAHRZEUG UND ZUGEHÖRIGES VERFAHREN
AGENCEMENT DE CHARGEMENT POUR VÉHICULE ÉLECTRIQUE ET PROCÉDÉ CORRESPONDANT

(43) Date of publication of application: 25.03.2020
(73) Proprietor: ABB Schweiz AG, 5400 Baden (CH)
(72) Inventor: Van-der-Horst, Arjen, 2623GT Delft (NL); Zoon, Wiebe, 2623NM Delft (NL)
(74) Representative: Maiwald Patent- und Rechtsanwaltsgesellschaft mbH

(56) References cited:
- WO-A1-2014/078456
- WO-A2-2011/079215
- GB-A- 2 185 866

## Description

### Technical Field

The invention relates to a charging arrangement for an electrical vehicle, comprising the electrical vehicle and a charger component, whereby the electrical vehicle comprises a first charging connector arranged underneath the electrical vehicle for receiving electrical energy to charge the electrical vehicle. The invention further relates to a method for charging an electrical vehicle with electrical energy by a charger component, whereby the electrical vehicle comprises a first charging connector arranged underneath the electrical vehicle for receiving electrical energy to charge the electrical vehicle.

### Background Art

Electric vehicle, EV, direct current, DC, fast charging systems and methods often use a so-called Combined Charging System, CCS, protocol according to IEC 61851-23 and SAE J1772 standard for charging electrical vehicles both in the US and in the European Union, EU. As charge currents increase, liquid cooled charge cables for connecting an Electric Vehicle Supply Equipment, EVSE, via a charge connector with the electrical vehicle are becoming more commonly used. The liquid cooling allows conductors within the charge cable to become thinner, and thereby less stiff and easier to use, because excessive heat due to high charge currents and charge cable internal resistances is taken care of. On the other side liquid cooling increases weight of the charge cable and makes handling due to the additional weight difficult.

Even though, as charge currents are still going up, cables are becoming thicker. In turn weight of such high power cables and in particular of liquid cooled conductive cables are increasing and are becoming too much for an ordinary person to handle. Besides that, connectors are vulnerable components that are easily damaged if dropped or handled incorrectly and cooled cables only offer limited extensions to those power levels. Therefore, robotic systems have been developed for overcoming these disadvantages. However, such robotic systems are expensive and potentially dangerous for humans being too close to such robotic arms.

The document WO 2011/079215 A2 discloses a charging arrangement for an electrical vehicle which is preferably provided for an overhead mounting relatively to the electric vehicle. The charging arrangement comprises a scoop on a top surface of the vehicle. A connector head arm is provided for supporting an electrical connector head assembly of the charging station. The connector arm includes various bars or components connected one to another so that they can move relative to one another. Thus, many different components are necessary for realizing the movable mechanical connection.

The document WO 2014/078456 A1 describes a similar charging arm comprising a plurality of charging brushes, which is positioned relative to the position of an electric vehicle. The plurality of charging brushes on the charging arm is positioned to contact a charging interface of the electric vehicle. The charging brushes are moved relative to the charging interface such that a portion of the charging brushes is removed as a result of the movement.

The document GB 2 185 866 A discloses that in response to an interengagement between a contact assembly on the vehicle and a charging head, charging current is supplied to the charging head for recharging the vehicle's battery. Many mechanical elements are necessary to connect the charging head to the ground.

### Summary of invention

It is therefore an object of the invention to provide a changing arrangement and a respective method for changing an electrical vehicle in a simple and automated manner.

The object of the invention is solved by features of the independent claims. Preferred embodiments are detailed in the dependent claims.

Thus, the object is solved by a charging arrangement for an electrical vehicle, as claimed in claim 1.

The object of the invention is further solved by a method for charging an electrical vehicle with electrical energy by a charger component, as claimed in claim 12.

It is therefore a key point of the invention that an electrical connection for charging the electrical vehicle can be simply accomplished by driving the electrical vehicle above the charger component such that the first charging connector becomes inserted into the second charging connector, or alternatively by a simple translation of the second charging connector to a stationary electrical vehicle. Thus, the term inserting shall also be understood as comprising a translational and/or vertical movement of the second charging connector towards the first charging connector of a stationary electrical vehicle. Thus, an actuation for connecting the electrical vehicle and the charger component is actually done by moving respectively driving the electrical vehicle. Therefore, the proposed solution can be implemented in a very cheap manner without the need for an expensive and support intensive actuator for connecting the charger component to the electrical vehicle. In the case of moving the second charging connector the proposed solution does not need complex guidance systems but only a linear actuator. As the spring allows a vertical, horizontal and rotational movement of the second charging connector within a certain range, a great degree of flexibility exists for positioning the electrical vehicle above the charger component. In other words, even if the electrical vehicle with its first charging connector is not fully correctly inserted into the second charging connector, the spring allows movement of the second charging connector in vertical, horizontal and rotational direction thereby facilitating the connection of the charging connectors. The spring may be made of metal, or any flexible material, such as rubber. Inserting shall be preferably understood as movement in horizontal direction.

The electrical vehicle can be provided as an electrical car, an ebus, a truck or any other electrical vehicle means. Providing the first charging connector underneath the electrical vehicle reduces cabling, weight of the electrical vehicle and respective costs, as a vehicle battery is usually provided on the bottom of the electrical vehicle due to weight distribution and therefore close to said first charging connector. The first charging connector and/or the second charging connector respectively the vehicle contacts and/or the charging contacts are preferably configured respectively dimensioned for charging currents of 63 A, 80 A, 125 A or more. Providing the first charging interface underneath the electrical vehicle shall preferably be understood that use other charging interfaces for example on a side of the electrical vehicle is not excluded. The electrical vehicle may comprise a vehicle body made of plastics, aluminium and/or metal to which the first charging connector can be attached, for example by means of screws.

The charger component may be part of an Electric Vehicle Supply Equipment, EVSE, for charging the electrical vehicle according to a called Combined Charging System, CCS, protocol according to IEC 61851-23 and SAE J1772. The Combined Charging System, CCS, protocol is a fast charging method for charging electric vehicles delivering high-voltage direct current via a charging connector derived from SAE J1772 standard (IEC Type 1) or IEC Type 2 connector. Automobile manufactures that support CCS include Jaguar, Volkswagen, General Motors, BMW, Daimler, Ford, FCA, Tesla and Hyundai. The CSS standard is controlled by the so called CharIN consortium. Besides other protocols such as, for example, CHAdeMO, as abbreviation of CHArge de Move, or GB/T, in particular according to 20234.3-2011 standard, can be used in connection with the proposed arrangement and/or method. Such way, the EVSE may comprise a transformer and/or a converter for connecting to respectively receiving electrical energy from an AC grid, which is transformed and/or converted to DC for being supplied to the first charging connector via a charging cable attached thereto.

The spring is preferably firmly attached to ground. The term spring shall be understood as a metal spring or comprising a flexible material. Thus, not only spring in the literal meaning of the term shall be meant. The first charging connector, the second charging connector, the charging contacts, the vehicle contacts and/or the intermediate element preferably comprises an elongated and/or bar-like shape in longitudinal direction. Preferably the first charging connector corresponds to the second charging connector in such a way that the first charging connector can be slided onto the second charging connector by an horizontal movement and/or that the second charging connector can be connected to the first charging connector by a vertical movement away from ground. The charging connectors are preferably configured for having a form-locking connection once connected. Such way, the charging connectors preferably each comprise, in a fully connected state, a corresponding surface facing each other. Preferably, the charging contacts are arranged completely within the first charging connector and/or that the charging contacts are configured such that the charging contacts are touch safe arranged in between the intermediate element while being connectable by the vehicle contacts.

In other words, the proposed solution uses an under car plugging location that is generally considered best location for an automatic connection system and uses the manoeuvrability of the electrical vehicle for large scale positioning of the first charging connector in respect to the second charging connector, and flexibility in the charger component for small scale end positioning thanks to the spring. Dirt, water, oil is mitigated by keeping the charger component very open so any small particles and moistures fall through, and by having no openings to the interior of the second charging connector, thereby not risking getting stuck by it. For establishing an electrical connection, the electrical vehicle just drives over the charger component, and the vehicle contacts extending slightly from the electrical vehicle will slide into slots formed by the intermediate elements in the second charging connector. The charging contacts provide a long enough contact area so the electrical vehicle does not need to stop at precisely the right position and the charger component itself has the flexibility to rotate, translate sideways and up or down, and is pushed to the right location and orientation by the electrical vehicle thanks to the spring. The proposed solution does not need any actuator for correct functioning, but to accommodate a wide variety of electrical vehicle, to enhance a feeling of luxury, or to create a better connection in case of high power charging, it can benefit from having a simple actuator that increases or decreases the height of the charger component and the force applied to the electrical connection.

The vehicle contacts and/or the charging contacts are preferably made of copper and/or extend over the completely or nearly complete longitudinal extension of the respective charging connector. The vehicle contacts and/or the charging contacts are preferably spaced apart by equal distances, for example, 2, 3 or 4 cm. Each two intermediate elements and a respective charging contact, in frontal side view of the charger component, preferably form a slot and/or a recess wherein the respective charging contact is recessed towards ground in respect to the two adjacent intermediate elements. Such way the respective charging contact can be provided touch safe for human fingers.

In a preferred implementation of the charging arrangement inserting the first charging connector into the second charging connector for establishing electrical connection between the first charging connector and the second charging connector comprises inserting and/or sliding the respective vehicle contacts into the charging contacts for establishing electrical connections between the vehicle contacts and the charging contacts. By said inserting, in particular by driving the electrical vehicle "into" the charger component, or alternatively to a platform which can translate in the mating direction but is otherwise restrained or by moving the second charging connector into a vehicle outlet formed by the first charging connector, conductive connection is established between the electrical vehicle and the charger component in a simple manner without a need for an automated actuation system.

In another preferred implementation of the charging the vehicle contacts, the charging contacts and/or the intermediate elements comprise an elongated, bar-like shape, which preferably extend in longitudinal extension of the electrical vehicle respectively of the charger component. Preferably, the electrical vehicle comprises a backseat and/or a rear axle and the first charging connector is arranged underneath the backseat and/or adjacent to the rear axle of the electrical vehicle. The vehicle battery is preferably arranged on the bottom of the vehicle for receiving an optimal weight distribution and in particular underneath the backseat. If the first charging connector and the vehicle battery are provided in equal manner underneath the backseat and/or adjacent to the rear axle thick cables/busbars required for connecting the first charging connector to the vehicle battery can be very short in length and thus light in weight.

In a further preferred implementation of the charging arrangement the first charging connector comprises a vehicle base plate attached to the vehicle and at least two isolation elements extending in longitudinal direction on which the vehicle contacts are arranged. The vehicle contacts preferably extend in longitudinal direction of the electrical vehicle and/or overtop, in transverse lateral view, the isolation elements towards ground, for example by 0,6 cm, 0,8 cm, or 1 cm.

In another preferred implementation of the charging arrangement the second charging connector comprises a base plate attached to the spring and comprising two lateral guiding elements extending in longitudinal direction for guiding the insertion of the first charging connector. The guiding surfaces advantageously provide guidance for the first charging connector such that the vehicle contacts are aligned in correspondence to the charging contacts. Preferably, the guiding elements, the first charging connector and/or the second charging connector are provided such that the first charging connector and the second charging connector can be form-locking connected.

In a further preferred implementation of the charging arrangement each charging contact is recessed between two adjacent intermediate elements and/or the recess is dimensioned such that the charging contact is touch safe for human fingers and/or that the recess comprises a width of ≤ 0,6 cm, 0,8 cm or 1 cm and/or a depth in respect to ground of ≥ 0,6 cm, 0,8 cm or 1 cm. The recess preferably extends along the complete longitudinal extension, thereby allowing a contact safe connection between the charging connectors.

In another preferred implementation of the charging arrangement the second charging connector comprises at least one brush arranged at its lateral border and/or extending in traverse direction. Preferably, two brushes are provided ach each lateral border, which extend across the complete traverse extension of the base plate and/or between the two lateral guiding elements. Such brush allows advantageously for cleaning any dirt from the first charging connector before inserting respectively connecting to the second charging connector.

In a further preferred implementation of the charging arrangement the second charging connector comprises at least one funnel shaped end extending in longitudinal, horizontal and/or vertical direction. Preferably, each one funnel shaped end is attached to each end of the lateral guiding elements extending in longitudinal direction thereby facilitating insertion of the first charging connector onto the second charging connector. Additionally, funnel shaped ends may extend in continuation of the base plate in horizontal direction.

In another preferred implementation of the charging the charging contacts, in longitudinal extension and within the recesses, are separated into single charging contacts, which are connected to each other at the adjacent intermediate elements. Separating the charging contact in single charging contacts reduces friction when gliding the vehicle contact over the charging contact.

In a further preferred implementation the charging arrangement comprises 5 vehicle contacts, 5 charging contacts and 6 intermediate elements and/or 2 or 4 springs. Such way two respective contacts can be used for supplying DC power, while the remaining contacts can be used for proximity pilot, PP, signalling, control pilot, CP, signalling and protective earth. 4 springs can be arranged as square preferably such that the first charging device is arranged 20 to 30 cm above ground. In another preferred implementation of the charging arrangement or of the method the spring is provided as bow spring, thereby providing a stable but flexible positioning of the first charging device.

In a further preferred implementation of the charging arrangement inserting comprises a horizontal and/or sliding movement in longitudinal extension of the at least two charging contacts and/or the at least three intermediate elements. Thus the proposed solution used uses the manoeuvrability of the electrical vehicle for large scale positioning and flexibility of the first charger component arranged on the spring for small scale end positioning by said horizontal and/or sliding movement. In another preferred implementation of the charging arrangement or of the method the second charging connector is attached to the at least one spring distant to ground.

### Brief description of drawings

These and other aspects of the invention will be apparent from and elucidated with reference to the embodiments described hereinafter.

In the drawings:
Fig. 1 shows a first charging connector of an electrical vehicle that is horizontally slid onto a charger component having a second charging connector and a spring attached to ground according to a preferred embodiment in a first schematic, perspective view,
Fig. 2 shows the first charging connector of the electrical vehicle that is connected to the charger component having the second charging connector and the spring attached to ground according to the preferred embodiment in a second schematic, perspective view,
Fig. 3 shows the first charging connector of the electrical vehicle that is horizontally slid onto the charger component having the second charging connector according to the preferred embodiment in a third schematic top view,
Fig. 4 shows the charger component having the second charging connector according to the preferred embodiment in a fourth schematic, perspective view,
Fig. 5 shows the charger component having the second charging connector according to the preferred embodiment in a fifth schematic side view, and
Fig. 6 shows the electrical vehicle connected to a charger component having an additional charger component attached thereto in fifth schematic, perspective view.

### Description of embodiments

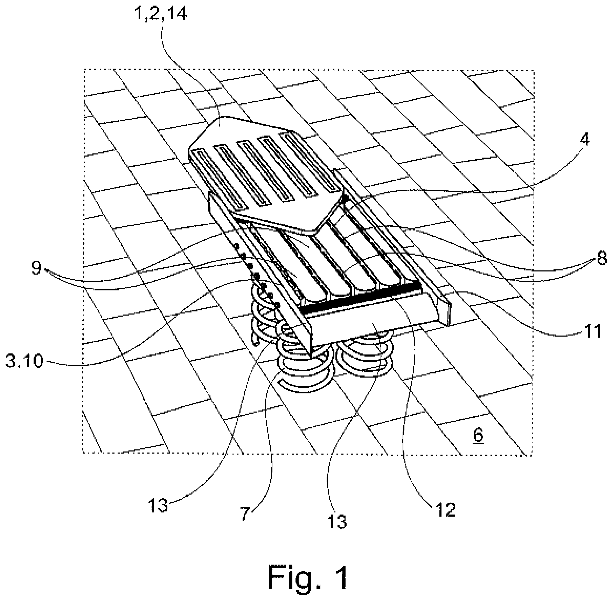

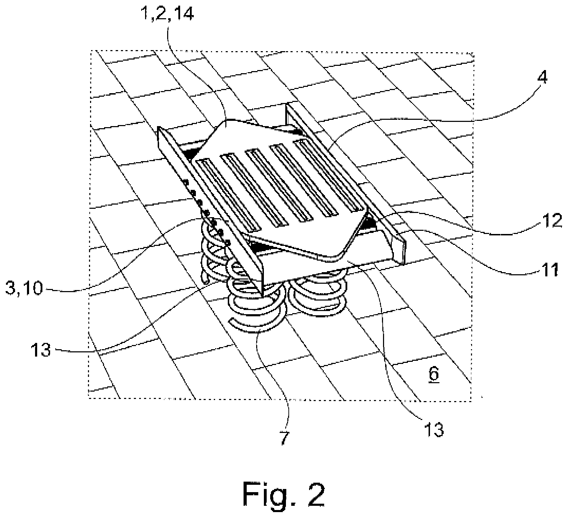

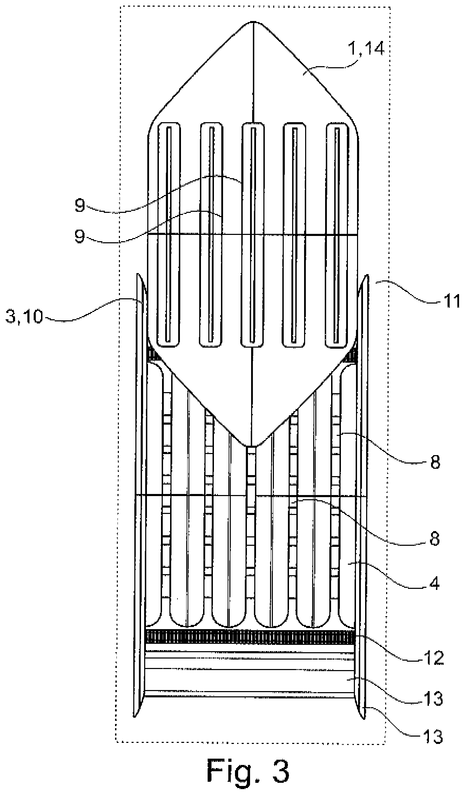

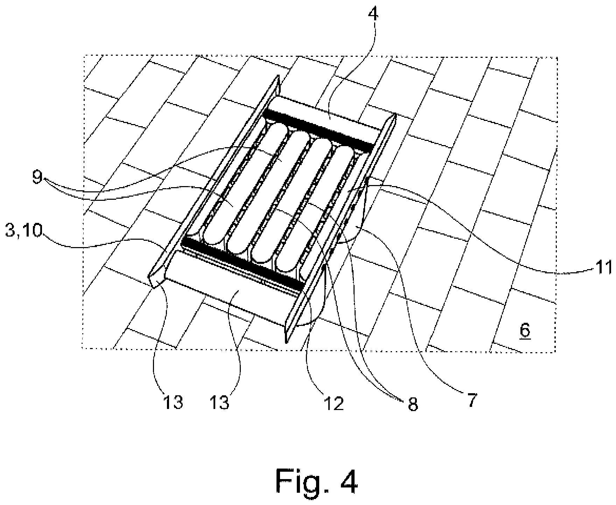

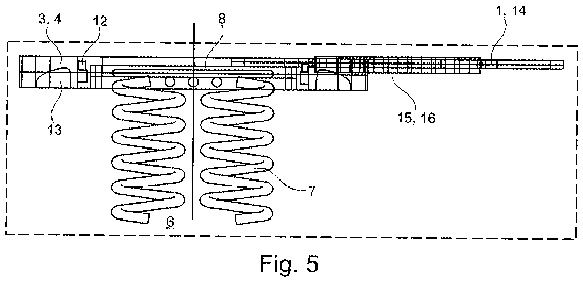

Fig. 1 shows a first charging connector 1 of an electrical vehicle 2, only indicated in Fig. 1, that is being horizontally slid onto a charger component 3 having a second charging connector 4 and a spring 7 attached to ground 6 according to a preferred embodiment in a schematic, perspective view, while Fig. 3 shows a respective schematic top view of said embodiment. Fig. 2 shows the same embodiment whereby the first charging connector 1 is fully slid onto the charger component 3 and thus electrically connected to the second charging connector 4. Fig. 4 shows as schematic, perspective view the charger component 3 without the first charging connector 1, while Fig. 5 shows a respective side view.

The charger component 3 comprises a bar-like base plate 10 which extends with an upper surface in horizontal direction and parallel to ground. The charger component 3 is arranged distant to ground 6 on four bow springs 7, which are arranged adjacent to each other in a square. The four springs 7 are firmly attached with their other end to ground 6 and thereby allow a vertical, horizontal and rotational movement of the second charging connector 4 relative to ground 6. The bar-like base plate 10 comprises five charging contacts 8 made of copper which are arranged in between six intermediate elements 9 made of a non-conductive material such as plastics. The charging contacts 8 and the intermediate elements 9 extend in longitudinal direction of the base plate 10 having an elongated, bar-like shape, whereby the charging contacts 8 are arranged recessed towards ground in respect to the intermediate elements 9. The recess is dimensioned with a width and depth of 0,8 cm such that human fingers cannot touch the charging contacts 8. Two of the charging contacts 8 are configured for charging the electrical vehicle 2 with a DC current, while the remaining charging contacts 8 for proximity pilot, PP, signalling, control pilot, CP, signalling and protective earth.

The base plate 10 comprises two lateral guiding elements 11 extending in longitudinal direction for guiding the insertion of the first charging connector 1 onto the second charging connector 3. The charging contacts 8 and the intermediate elements 9 are such way laterally encased by said guiding elements. Brushes 12 are provided at lateral, traverse borders of the base plate 10, which extend across the full lateral extension of the charging contacts 8 and the intermediate elements 9. In extension of the lateral guiding elements 11 funnel shaped ends 13 are arranged at both ends of the guiding elements 11. Further guidance is provided by funnel shaped ends 13 that extends in horizontal direction in extension of the horizontal base plate 10, thereby providing a rounded lateral border of the base plate 10. The charging contacts 8, as can be seen best in Fig. 3, are separated, in longitudinal extension of the base plate 10 and within the recesses formed by the intermediate elements 9, into single charging contacts, which are connected to each other below or within the adjacent intermediate elements 9.

The first charging connector 1 comprises a vehicle base plate 14 attached underneath to the vehicle 2. The vehicle base plate 14 comprises five isolation elements 15 spaced apart from each other and comprising an isolation material, which extend in longitudinal direction of the electrical vehicle 2. Five vehicle contacts 16 corresponding to the charging contacts 8 are arranged centrically on the five isolation elements 15 and also extend in longitudinal direction of the electrical vehicle 2, thereby also extending in an overtopping manner, as can be seen from Fig. 5, the isolation elements 15 towards ground. Such way, by sliding respectively inserting the first charging connector 1 onto the second charging connector 1 by driving the electrical vehicle 2 "over" the charger component 3, an electrical connection is established between the respective vehicle contacts 16 and the charger contacts 8.

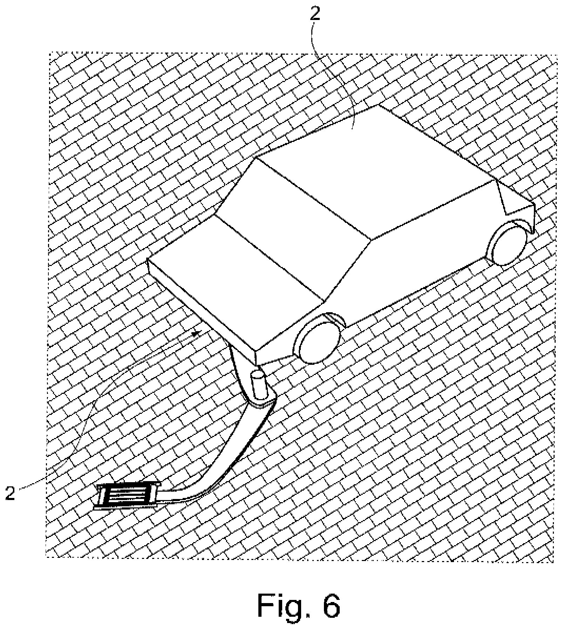

Fig. 6 shows an illustrative example in which the electrical vehicle 2 connected to a charger component 3 as described before, whereby the charger component 3 comprises an additional charger component attached thereto. The additional charger component is provided in the same manner as the charger component 3, while springs 7 can be omitted. Instead a flexible hinge can be provided between the charger component 3 and the additional charger component. Such way the illustrative example shown in Fig. 6 can be used to connect the electrical vehicle 2 via the charger component 3 and the additional charger component to a stationary charger.

### Reference signs list

- 1: first charging connector
- 2: electrical vehicle
- 3: charger component
- 4: second charging connector
- 6: ground
- 7: spring
- 8: charging contact
- 9: intermediate element
- 10: baseplate
- 11: guiding element
- 12: brush
- 13: funnel shaped end
- 14: vehicle base plate
- 15: isolation element
- 16: vehicle contact

## Claims

1. Charging arrangement for an electrical vehicle (2), comprising the electrical vehicle (2) and a charger component (3), whereby the electrical vehicle (2) comprises a first charging connector (1) arranged underneath the electrical vehicle (2) for receiving electrical energy to charge the electrical vehicle (2), whereby the first charging connector (1) comprises at least two vehicle contacts (16) which are spaced apart from each other and extend both in longitudinal direction of the electric vehicle (2) and from the electrical vehicle (2) towards ground, the at least two vehicle contacts (16) having an elongated shape in the longitudinal direction of the electric vehicle (2), and a second charging connector (4) for providing electrical energy to the electrical vehicle (2), whereby the second charging connector (4) comprises at least two charging contacts (8) corresponding to the at least two vehicle contacts (16) such that, by inserting and/or connecting the first charging connector (1) onto and/or with the second charging connector (4), electrical connection is established between the first charging connector (1) and the second charging connector (4), wherein the charger component (3) comprises at least one spring (7) for attaching to ground (6), whereby the second charging connector (4) is attached to the ground (6) via the at least one spring (7), the spring force allowing a vertical, horizontal and rotational movement of the second charging connector (4), **characterized in that** the second charging connector (4) further comprises a baseplate (10,14) which extends with an upper surface parallel to ground (6) and comprises the at least two charging contacts (8) and at least three non-conductive intermediate elements (9), each charging contact (8) arranged recessed between two adjacent intermediate elements (9), the at least two charging contacts (8) and the at least three intermediate elements (9) extending in a longitudinal direction of the base plate (10,14) and having an elongated shape in the longitudinal direction of the base plate (10,14).

2. Charging arrangement according to the previous claim whereby inserting the first charging connector (1) (into the second charging connector (4) for establishing electrical connection between the first charging connector (1) and the second charging connector (4) comprises inserting and/or sliding the respective vehicle contacts (16) into the charging contacts (8) for establishing electrical connections between the vehicle contacts (16) and the charging contacts (8).

3. Charging arrangement according to any of the previous claims, whereby the second charging connector (4) comprises the base plate (10) attached to the spring (7) and comprising two lateral guiding elements (11) extending in longitudinal direction for guiding the insertion of the first charging connector (1).

4. Charging arrangement according to any of the previous claims, whereby each charging contact (8) is recessed between two adjacent intermediate elements (9) and/or the recess is dimensioned such that the charging contact (8) is touch safe for human fingers and/or that the recess comprises a width ≤ 0,6 cm, 0,8 cm or 1 cm and/or a depth in respect to the ground (6) of ≥ 0,6 cm, 0,8 or 1 cm.

5. Charging arrangement according to any of the previous claims, whereby the second charging connector (4) comprises at least one brush (12) arranged at its lateral border and/or extending in traverse direction.

6. Charging arrangement according to any of the previous claims, whereby the second charging connector (4) comprises at least one funnel shaped end (13) extending in longitudinal, horizontal and/or vertical direction.

7. Charging arrangement according to any of the previous claims, whereby the charging contacts (8), in longitudinal extension and within the recesses, are separated into single charging contacts (8), which are connected to each other at the adjacent intermediate elements (9).

8. Charging arrangement according to any of the previous claims, comprising 5 vehicle contacts (16), 5 charging contacts (8) and 6 intermediate elements (9) and/or 2 or 4 springs (7).

9. Charging arrangement according to any of the previous claims, whereby the spring (7) is provided as bow spring.

10. Charging arrangement according to any of the previous claims, whereby the inserting comprises a horizontal and/or sliding movement in longitudinal extension of the at least two charging contacts (8) and/or the at least three intermediate elements (9).

11. Charging arrangement according to any of the previous claims, whereby the second charging connector (4) is attached to the at least one spring (7) distant to the ground (6).

12. Method for charging an electrical vehicle (2) with electrical energy by a charger component (3) of a charging arrangement according to one of the previous claims, whereby the method comprises the step of connecting and/or inserting the first charging connector (1) onto and/or with the second charging connector (4) for establishing electrical connection between the first charging connector (1) and the second charging connector (4).

## Patentansprüche

1. Ladeanordnung für ein Elektrofahrzeug (2), umfassend das Elektrofahrzeug (2) und eine Laderkomponente (3), wobei das Elektrofahrzeug (2) einen unterhalb des Elektrofahrzeugs (2) angeordneten ersten Ladeanschluss (1) zum Empfangen elektrischer Energie zum Laden des Elektrofahrzeugs (2) umfasst, wobei der erste Ladeanschluss (1) mindestens zwei Fahrzeugkontakte (16) umfasst, die voneinander beabstandet sind und sich sowohl in Längsrichtung des Elektrofahrzeugs (2) als auch vom Elektrofahrzeug (2) in Richtung Boden erstrecken, wobei die mindestens zwei Fahrzeugkontakte (16) eine in der Längsrichtung des Elektrofahrzeugs (2) längliche Form aufweisen, und einen zweiten Ladeanschluss (4) zum Bereitstellen von elektrischer Energie für das Elektrofahrzeug (2), wobei der zweite Ladeanschluss (4) mindestens zwei Ladekontakte (8) aufweist, die den mindestens zwei Fahrzeugkontakten (16) entsprechen, derart, dass durch Einführen und/oder Verbinden des ersten Ladeanschlusses (1) auf und/oder mit dem zweiten Ladeanschluss (4) elektrische Verbindung zwischen dem ersten Ladeanschluss (1) und dem zweiten Ladeanschluss (4) hergestellt wird, wobei die Laderkomponente (3) mindestens eine Feder (7) zur Befestigung am Boden (6) umfasst, wobei der zweite Ladeanschluss (4) über die mindestens eine Feder (7) am Boden (6) befestigt ist, wobei die Federkraft eine vertikale, eine horizontale und eine rotatorische Bewegung des zweiten Ladeanschlusses (4) ermöglicht, **dadurch gekennzeichnet, dass** der zweite Ladeanschluss (4) ferner eine Grundplatte (10, 14) umfasst, die sich mit einer oberen Fläche parallel zum Boden (6) erstreckt und die mindestens zwei Ladekontakte (8) und mindestens drei nichtleitende Zwischenelemente (9) umfasst, wobei jeder Ladekontakt (8) zwischen zwei benachbarten Zwischenelementen (9) vertieft angeordnet ist, wobei sich die mindestens zwei Ladekontakte (8) und die mindestens drei Zwischenelemente (9) in einer Längsrichtung der Grundplatte (10, 14) erstrecken und eine längliche Form in der Längsrichtung der Grundplatte (10, 14) aufweisen.

2. Ladeanordnung nach dem vorhergehenden Anspruch, wobei das Einführen des ersten Ladeanschlusses (1) in den zweiten Ladeanschluss (4) zum Herstellen von elektrischer Verbindung zwischen dem ersten Ladeanschluss (1) und dem zweiten Ladeanschluss (4) Einführen und/oder Einschieben der jeweiligen Fahrzeugkontakte (16) in die Ladekontakte (8) zum Herstellen elektrischer Verbindungen zwischen den Fahrzeugkontakten (16) und den Ladekontakten (8) umfasst.

3. Ladeanordnung nach einem der vorhergehenden Ansprüche, wobei der zweite Ladeanschluss (4) die an der Feder (7) befestigte Grundplatte (10) umfasst und zwei seitliche, sich in Längsrichtung erstreckende Führungselemente (11) zur Führung des Einführens des ersten Ladeanschlusses (1) umfasst.

4. Ladeanordnung nach einem der vorhergehenden Ansprüche, wobei jeder Ladekontakt (8) zwischen zwei benachbarten Zwischenelementen (9) vertieft ist und/oder die Vertiefung so bemessen ist, dass der Ladekontakt (8) für menschliche Finger berührungssicher ist und/oder dass die Vertiefung eine Breite ≤ 0,6 cm, 0,8 cm oder 1 cm und/oder eine Tiefe in Bezug auf den Boden (6) von ≥ 0,6 cm, 0,8 cm oder 1 cm umfasst.

5. Ladeanordnung nach einem der vorhergehenden Ansprüche, wobei der zweite Ladeanschluss (4) mindestens eine an seinem seitlichen Rand angeordnete und/oder sich in Querrichtung erstreckende Bürste (12) umfasst.

6. Ladeanordnung nach einem der vorhergehenden Ansprüche, wobei der zweite Ladeanschluss (4) mindestens ein trichterförmiges Ende (13) umfasst, das sich in Längs-, Horizontal- und/oder Vertikalrichtung erstreckt.

7. Ladeanordnung nach einem der vorhergehenden Ansprüche, wobei die Ladekontakte (8) in Längserstreckung und innerhalb der Vertiefungen in einzelne Ladekontakte (8) aufgeteilt sind, die an den benachbarten Zwischenelementen (9) miteinander verbunden sind.

8. Ladeanordnung nach einem der vorhergehenden Ansprüche, umfassend 5 Fahrzeugkontakte (16), 5 Ladekontakte (8) und 6 Zwischenelemente (9) und/oder 2 oder 4 Federn (7).

9. Ladeanordnung nach einem der vorhergehenden Ansprüche, wobei die Feder (7) als Bogenfeder bereitgestellt ist.

10. Ladeanordnung nach einem der vorhergehenden Ansprüche, wobei das Einführen eine horizontale und/oder eine gleitende Bewegung in Längserstreckung der mindestens zwei Ladekontakte (8) und/oder der mindestens drei Zwischenelemente (9) umfasst.

11. Ladeanordnung nach einem der vorhergehenden Ansprüche, wobei der zweite Ladeanschluss (4) an der mindestens einen, vom Boden (6) entfernten Feder (7) befestigt ist.

12. Verfahren zum Laden eines Elektrofahrzeugs (2) mit elektrischer Energie durch eine Laderkomponente (3) einer Ladeanordnung nach einem der vorhergehenden Ansprüche, wobei das Verfahren den Schritt des Verbindens und/oder des Einführens des ersten Ladeanschlusses (1) auf und/oder mit dem zweiten Ladeanschluss (4) zum Herstellen elektrischer Verbindung zwischen dem ersten Ladeanschluss (1) und dem zweiten Ladeanschluss (4) umfasst.

## Revendications

1. Dispositif de charge pour un véhicule électrique (2) , comprenant le véhicule électrique (2) et un composant de chargeur (3), moyennant quoi le véhicule électrique (2) comprend un premier connecteur de charge (1) agencé en dessous du véhicule électrique (2) pour recevoir de l'énergie électrique pour charger le véhicule électrique (2), moyennant quoi le premier connecteur de charge (1) comprend au moins deux contacts de véhicule (16) qui sont espacés les uns des autres et s'étendent à la fois dans la direction longitudinale du véhicule électrique (2) et à partir du véhicule électrique (2) vers le sol, les au moins deux contacts de véhicule (16) ayant une forme allongée dans la direction longitudinale du véhicule électrique (2), et un second connecteur de charge (4) pour fournir de l'énergie électrique au véhicule électrique (2), moyennant quoi le second connecteur de charge (4) comprend au moins deux contacts de charge (8) correspondant aux au moins deux contacts de véhicule (16) de telle sorte que, en insérant et/ou en connectant le premier connecteur de charge (1) sur et/ou avec le second connecteur de charge (4), une liaison électrique est établie entre le premier connecteur de charge (1) et le second connecteur de charge (4), dans lequel le composant de chargeur (3) comprend au moins un ressort (7) pour une fixation au sol (6), moyennant quoi le second connecteur de charge (4) est fixé au sol (6) par l'intermédiaire de l'au moins un ressort (7), la force de ressort permettant un mouvement vertical, horizontal et de rotation du second connecteur de charge (4), **caractérisé en ce que** le second connecteur de charge (4) comprend en outre une plaque de base (10, 14) qui s'étend avec une surface supérieure parallèle au sol (6) et comprend les au moins deux contacts de charge (8) et au moins trois éléments intermédiaires non conducteurs (9), chaque contact de charge (8) agencé en retrait entre deux éléments intermédiaires adjacents (9), les au moins deux contacts de charge (8) et les au moins trois éléments intermédiaires (9) s'étendant dans une direction longitudinale de la plaque de base (10, 14) et ayant une forme allongée dans la direction longitudinale de la plaque de base (10, 14).

2. Dispositif de charge selon la revendication précédente, moyennant quoi l'insertion du premier connecteur de charge (1) dans le second connecteur de charge (4) pour établir une liaison électrique entre le premier connecteur de charge (1) et le second connecteur de charge (4) comprend l'insertion et/ou le coulissement des contacts de véhicule respectifs (16) dans les contacts de charge (8) pour établir des liaisons électriques entre les contacts de véhicule (16) et les contacts de charge (8).

3. Dispositif de charge selon l'une quelconque des revendications précédentes, moyennant quoi le second connecteur de charge (4) comprend la plaque de base (10) fixée au ressort (7) et comprenant deux éléments de guidage latéraux (11) s'étendant dans la direction longitudinale pour guider l'insertion du premier connecteur de charge (1).

4. Dispositif de charge selon l'une quelconque des revendications précédentes, moyennant quoi chaque contact de charge (8) est en retrait entre deux éléments intermédiaires adjacents (9) et/ou le retrait est dimensionné de telle sorte que le contact de charge (8) est sans contact pour les doigts humains et/ou que le retrait comprend une largeur ≤ 0,6 cm, 0,8 cm ou 1 cm et/ou une profondeur par rapport au sol (6) ≥ 0,6 cm, 0,8 cm ou 1 cm.

5. Dispositif de charge selon l'une quelconque des revendications précédentes, moyennant quoi le second connecteur de charge (4) comprend au moins une brosse (12) agencée au niveau de sa bordure latérale et/ou s'étendant dans la direction transversale.

6. Dispositif de charge selon l'une quelconque des revendications précédentes, moyennant quoi le second connecteur de charge (4) comprend au moins une extrémité en forme d'entonnoir (13) s'étendant dans la direction longitudinale, horizontale et/ou verticale.

7. Dispositif de charge selon l'une quelconque des revendications précédentes, moyennant quoi les contacts de charge (8), dans l'extension longitudinale et à l'intérieur des retraits, sont séparés en contacts de charge uniques (8), qui sont reliés les uns aux autres au niveau des éléments intermédiaires adjacents (9).

8. Dispositif de charge selon l'une quelconque des revendications précédentes, comprenant 5 contacts de véhicule (16), 5 contacts de charge (8) et 6 éléments intermédiaires (9) et/ou 2 ou 4 ressorts (7).

9. Dispositif de charge selon l'une quelconque des revendications précédentes, moyennant quoi le ressort (7) est fourni en tant que ressort en arc.

10. Dispositif de charge selon l'une quelconque des revendications précédentes, moyennant quoi l'insertion comprend un mouvement horizontal et/ou coulissant dans l'extension longitudinale des au moins deux contacts de charge (8) et/ou des au moins trois éléments intermédiaires (9).

11. Dispositif de charge selon l'une quelconque des revendications précédentes, moyennant quoi le second connecteur de charge (4) est fixé à l'au moins un ressort (7) à distance du sol (6).

12. Procédé pour charger un véhicule électrique (2) avec de l'énergie électrique à l'aide d'un composant de chargeur (3) d'un dispositif de charge selon l'une des revendications précédentes, moyennant quoi le procédé comprend l'étape de
liaison et/ou insertion du premier connecteur de charge (1) sur et/ou avec le second connecteur de charge (4) pour établir une liaison électrique entre le premier connecteur de charge (1) et le second connecteur de charge (4).
